# EUROPEAN PATENT APPLICATION

(11) **EP 4 350 841 A1**
(43) Date of publication of application: **10.04.2024**
(21) Application number: 22810896.5
(22) Date of filing: 01.03.2022
(51) Int. Cl.: H01M 10/54, C22B 7/00

(54) **SORTING METHOD FOR VALUABLE MATERIALS**

(30) Priority: 28.05.2021 JP 2021090432
(71) Applicant: Dowa Eco-System Co., Ltd., Tokyo 101-0021 (JP)
(72) Inventor: YAMASHITA, Masataka, Tokyo 101-0021 (JP); HONMA, Yoshihiro, Tokyo 101-0021 (JP); NISHIKAWA, Chihiro, Tokyo 101-0021 (JP); LIU, Jiahao, Tokyo 101-0021 (JP); TAHATA, Shota, Tokyo 101-0021 (JP); LIU, Changzhi, Tokyo 101-0021 (JP)
(74) Representative: Müller-Boré & Partner Patentanwälte PartG mbB
(86) International application number: PCT/JP2022/008686
(87) International publication number: WO 2022/249615

(57) **Abstract**

A method of separating valuable materials. The method includes a heat treatment step of performing a heat treatment on a lithium-ion secondary battery including valuable materials, a crushing step of crushing a heat-treated product obtained in the heat treatment step, and a classification step including a first classification step of classifying a crushed product obtained in the crushing step into a coarse-particle product and an intermediate product at a classification cut-point of 0.6 mm or greater and 2.4 mm or less, and a second classification step of classifying the intermediate product into a medium-particle product and a fine-particle product at a classification cut-point of 40 um or greater and 300 um or less.

## Description

### Technical Field

The present invention relates to a method of separating valuable materials.

### Background Art

Lithium-ion secondary batteries are secondary batteries having a light weight, high capacity, and high electromotive force, compared to existing lead-acid batteries, nickel-cadmium (Ni-Cd) secondary batteries, etc., in the related art. Lithium-ion secondary batteries are used for personal computers, electric cars, mobile devices, and the like.

As the expanding use of the lithium-ion secondary batteries is expected to continue, it is desired to recover valuable materials from lithium-ion secondary batteries discarded because of defects generated during production processes, or discarded after the end of the service life of devices using the batteries or batteries themselves, in view of recycling of resources. When valuable materials, such as cobalt, nickel, manganese, aluminum, iron, and copper, are recovered from lithium-ion secondary batteries, it is important to selectively recover the valuable materials, while separating various metals and impurities used in the lithium-ion secondary batteries, so that values of recovered materials are increased.

As a technology for recovering valuable materials from lithium-ion secondary batteries, the following technology is proposed. In the proposed technology, heating, crushing, and classification are performed on lithium-ion secondary batteries, and wet magnetic separation is performed on the obtained fine-particle product to concentrate and recover cobalt, nickel, and the like (see, for example, PTL 1).

Moreover, proposed is a technology, in which heating and pulverization are performed, and magnetic separation is performed on the obtained pulverized product to recover magnetic materials (e.g., cobalt, nickel, etc.) separately from non-magnetic materials (e.g., copper) (see, for example, PTL 2).

Furthermore, the following technology is proposed. In the proposed technology, heating, crushing, and two-step classification are performed on lithium-ion secondary batteries, and dry magnetic separation is performed on a product of medium particles obtained by the classification to concentrate and recover cobalt, nickel, and the like (see PTL 3).

According to the above-described technologies, when cobalt and nickel are recovered using a magnetic force, for example, iron is also recovered and coexists because cobalt, nickel, iron, and the like are magnetic materials. Therefore, there is a problem such that a large amount of iron is contained in valuable materials that are obtained by concentrating cobalt and nickel from the lithium-ion secondary batteries. Another problem is such that, if a large amount of non-magnetic materials (e.g., copper and aluminum) is included in lithium-ion secondary batteries, the non-magnetic materials are also recovered as the non-magnetic materials are caught up together with the magnetic materials by magnetic separation. Moreover, there is a problem of low yields of cobalt and nickel in the medium-particle product.

### Citation List

### Patent Literature

PTL 1: Japanese Patent (JP-B) No. 6748274
PTL 2: Japanese Patent (JP-B) No. 6268130
PTL 3: Japanese Patent (JP-B) No. 6676124

### Summary of Invention

### Technical Problem

The present invention aims to solve the above-described various problems existing in the related art and to achieve the following object. Specifically, an object of the present invention is to provide a method of separating valuable materials, which can easily separate cobalt and nickel, and iron and copper from a lithium-ion secondary battery, and can obtain high grade valuable materials, in which cobalt and nickel are concentrated, at high recovery rates.

### Solution to Problem

Means for solving the above-described problems are as follows.
<1> A method of separating valuable materials, the method including:
   a heat treatment step of performing a heat treatment on a lithium-ion secondary battery including valuable materials;
   a crushing step of crushing a heat-treated product obtained in the heat treatment step; and
   a classification step including a first classification step of classifying a crushed product obtained in the crushing step into a coarse-particle product and an intermediate product at a classification cut-point of 0.6 mm or greater and 2.4 mm or less, and a second classification step of classifying the intermediate product into a medium-particle product and a fine-particle product at a classification cut-point of 40 um or greater and 300 um or less.
<2> The method of separating valuable material according to <1>,
   wherein the crushed product obtained in the crushing step is classified into the coarse-particle product and the intermediate product at the classification cut-point of 1.2 mm in the first classification step.
<3> The method of separating valuable materials according to <1> or <2>,
   wherein the heat treatment is performed on the lithium-ion secondary battery at 660°C or higher and 1,085°C or lower in the heat treatment step.
<4> The method of separating valuable materials according to any one of <1> to <3>,
   wherein the intermediate product is classified by wet classification at the classification cut-point of 40 um or greater and 75 um or less in the second classification step.
<5> The method of separating valuable materials according to any one of <1> to <4>,
   wherein the lithium-ion secondary battery is a lithium-ion secondary battery pack selected from a lithium-ion secondary battery pack for cars, a lithium-ion secondary battery pack for energy storage systems, and a lithium-ion secondary battery pack for uninterruptible power supplies.

### Effects of Invention

According to the present invention, the above-described various problems in the related art can be solved, and a method of separating valuable materials, which can easily separate cobalt and nickel, and iron and copper from a lithium-ion secondary battery, and can obtain high grade valuable materials, in which cobalt and nickel are concentrated, at high recovery rates, can be provided.

### Brief Description of Drawing

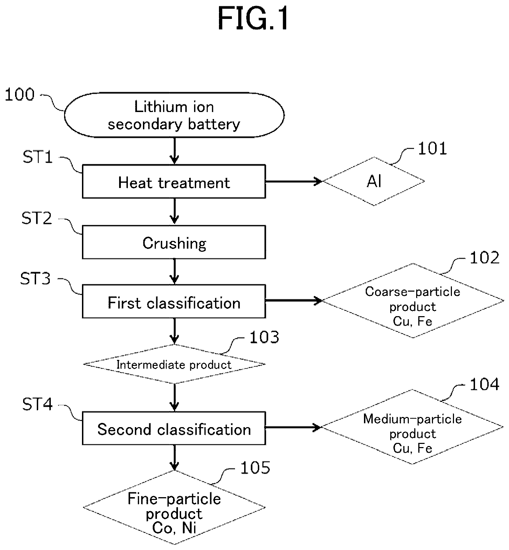

[Fig. 1] Fig. 1 is a flowchart illustrating one example of the method of separating valuable materials of the present invention.

### Description of Embodiments

### (Method of separating valuable materials)

The method of separating valuable materials of the present invention includes a heat treatment step, a crushing step, and a classification step, and may further include other steps, as necessary.

The method of separating valuable materials of the present invention is a method of recovering valuable materials from lithium-ion secondary batteries (LIB: Lithium ion batteries).

In the present specification, the "valuable materials" encompass materials that can be traded without discarding. Examples of the valuable materials include various metals, such as cobalt (Co), nickel (Ni), iron (Fe), copper (Cu), aluminum (Al), and the like.

The present inventors have diligently conducted research. As a result, the present inventors have found that, when cobalt and nickel are recovered by increasing concentrations of (condensing) cobalt and nickel from a subject, such as lithium-ion secondary batteries, in the related art, a grade or recovery rate of each of valuable materials is not sufficient.

More specifically, the present inventors have found the following problem in the technology disclosed in PTL 1 (Japanese Patent (JP-B) No. 6748274). In the case where large-scale LIB packs for cars, energy storage systems (ESS), uninterruptible power supplies (UPS) etc., uses of which are currently increasing, are processed, for example, an outer member of each pack (may be referred to a "pack housing" and is mainly formed of iron) constitutes a large proportion of the weight of the LIB pack. Therefore, part of crushed fine powder of the iron is also recovered in a fine-particle product, when the LIB packs are crushed and classified. If wet magnetic separation is performed on the fine-particle product including iron, most of the iron included in the crushed product is recovered as a magnetic material. The present inventors have found a problem such that cobalt and nickel cannot be separated from the iron because cobalt and nickel, which are subjects for separation, are magnetic and are recovered as magnetic materials. Moreover, the present inventors have also found that a large amount of sheet-like copper particles having large diameters is included in non-magnetic materials obtained by wet magnetic separation.

In the technology disclosed in PTL 2 (Japanese Patent (JP-B) No. 6268130), moreover, it is proposed that a sieving and separation step is provided before a magnetic separation step and copper is separated by a sieve of 1.0 mm. However, PTL 2 does not mention at all about a method of removing the above-described iron, which is magnetically attracted together with cobalt and nickel and cannot be removed by the magnetic separation step.

Moreover, the present inventors have found the following problems in the technology disclosed in PTL 3 (Japanese Patent (JP-B) No. 6676124). When large-scale LIB packs for cars, ESS/UPS, etc., are processed, a temperature difference is caused between a surface of the pack and a positive electrode active material (including cobalt and nickel) included in a cell inside the pack (the positive electrode active material is processed at the lower temperature than the surface of the pack) at the time of a heat treatment (for the purpose of deactivation of LIB or combustion removal of an electrolyte solution), because the volume of the LIB pack is large. Therefore, reduction and particle growth of cobalt oxide or nickel oxide metal particles in the positive electrode active material are not sufficiently progressed compared to the case where a heat treatment is performed on a cell itself. Accordingly, it is difficult to recover cobalt and nickel particles disclosed in PTL 3 in an intermediate product having a particle size of 0.3 mm or greater (namely, in order to recover the above-described fine cobalt and nickel particles, cobalt and nickel need to be recovered in a fine-particle product at a classification cut-point of 300 um or less).

As described above, the present inventors have found the problems in the related art, which are a problem such that impurities, such as iron and copper, are not sufficiently removed when cobalt and nickel are concentrated and recovered from a subject, such as lithium-ion secondary batteries, and a problem such that recovery rates of cobalt and nickel are low.

Therefore, the present inventors have diligently performed research on a method of separating valuable materials, which can easily separate cobalt and nickel, and iron and copper from lithium-ion secondary batteries including several types of valuable materials, and can obtain high grade valuable materials having high concentrations of cobalt and nickel at high recovery rates. The present invention has been accomplished based on the research of the present inventors.

Specifically, the present inventors have found that iron, copper, and the like are easily separated from lithium-ion secondary batteries including several types of valuable materials, and valuable materials having high concentrations of cobalt and nickel are obtained at high recovery rates according to a method of separating valuable materials, which includes a heat treatment step of performing a heat treatment on a lithium-ion secondary battery including valuable materials, a crushing step of crushing the heat-treated product obtained in the heat treatment step, and a classification step. The classification step includes a first classification step of classifying the crushed product obtained in the crushing step into a coarse-particle product and an intermediate product at a classification cut-point of 0.6 mm or greater and 2.4 mm or less, and a second classification step of classifying the intermediate product into a medium-particle product and a fine-particle product at a classification cut-point of 40 um or greater and 300 um or less.

### <Heat treatment step>

The heat treatment step is a step of performing a heat treatment on a lithium-ion secondary battery including the valuable materials.

The lithium-ion secondary battery is not particularly limited, and may be appropriately selected according to the intended purpose. The lithium-ion secondary battery is preferably a lithium-ion secondary battery pack selected from a lithium-ion secondary battery pack for cars, a lithium-ion secondary battery pack for energy storage systems, and a lithium-ion secondary battery pack for uninterruptible power supplies.

In the heat treatment step, for example, aluminum derived from a pack housing of a lithium-ion secondary battery, or derived from a constitutional member of a module (may be referred to as a "module housing"), or derived from a case of a cell (may be referred to as a "cell housing") is separated as a melted product, and organic matter derived from an electrolyte is decomposed.

More specifically, the heat treatment step is a step of performing a heat treatment on the lithium-ion secondary battery including the valuable materials to melt aluminum to separate as a melted product, to thereby obtain a heat-treated product (a roasted product) that has remained after separating the melted product. In the present specification, the heat-treated product encompasses a product obtained by performing the heat treatment on the lithium-ion secondary battery.

The method of performing the heat treatment in the heat treatment step is not particularly limited, and may be appropriately selected according to the intended purpose. Examples of the method include a method where a lithium-ion secondary battery is heated in a roasting furnace available in the related art, or the like.

The roasting furnace is not particularly limited, and may be appropriately selected according to the intended purpose. Examples of the roasting furnace include rotary kilns, fluidized bed furnaces, tunnel kilns, batch-type furnaces (e.g., Muffle furnaces), fixed-bed furnaces, cupola furnaces, stoker furnaces, and the like.

The atmosphere used for the heat treatment is not particularly limited, and may be appropriately selected according to the intended purpose. Examples of the atmosphere include ambient atmosphere, inert atmosphere, reducing atmosphere, low-oxygen atmosphere, and the like.

The ambient atmosphere (air atmosphere) encompasses the atmosphere using the atmospheric gas (air) including approximately 21% by volume of oxygen and approximately 78% by volume of nitrogen.

Examples of the inert atmosphere include atmosphere composed of nitrogen and, or argon.

The reducing atmosphere encompasses, for example, atmosphere where CO, H₂, H₂S, SO₂, and the like are included in inert atmosphere (e.g., nitrogen, argon, etc.).

The low-oxygen atmosphere encompasses atmosphere including 11% by volume or less of oxygen.

The conditions (heat-treatment conditions) for performing the heat treatment (heating) on the lithium-ion secondary battery are not particularly limited, except that the conditions are conditions in which each of constitutional components of the lithium-ion secondary battery is separated to be crushable in the below-described crushing step. The conditions may be appropriately selected according to the intended purpose.

Examples of the conditions of the heat treatment include a temperature of the heat treatment, duration of the heat treatment, and the like.

The temperature of the heat treatment is a temperature of the lithium-ion secondary battery during the heat treatment.

The temperature of the heat treatment is not particularly limited, and may be appropriately selected according to an embodiment of the lithium-ion secondary battery. The temperature of the heat treatment is preferably a temperature equal to or higher than a melting point of the housing of the lithium-ion secondary battery, or equal to or higher than a melting point of a positive electrode collector of the lithium-ion secondary battery, and equal to or lower than a melting point of a negative electrode collector of the lithium-ion secondary battery.

When the temperature of the heat treatment is set at a temperature equal to or higher than a melting point of a housing of the lithium-ion secondary battery, if the housing of the lithium-ion secondary battery is formed of a metal, the housing can be melted. Therefore, the metals derived from the housing and the electrodes, etc., of the lithium-ion secondary battery are easily separated and recovered, for example, by placing a receiving pan for recovering the melted metal of the housing below the lithium-ion secondary battery.

More specifically, for example, the temperature of the heat treatment is preferably 660°C or higher, which is a melting point of aluminum, in the case where the housing of the lithium-ion secondary battery includes aluminum. When the temperature of the heat treatment is 660°C or higher, aluminum included in the housing and other parts (for example, electrodes, etc.) of the lithium-ion secondary battery is easily separated (isolated) to simply recover the aluminum derived from the housing in the heat treatment step. Moreover, at the above-mentioned temperature, cobalt and nickel present as oxides in the positive electrode active material can be reduced to metal particles of cobalt and nickel by the action of carbon included as the negative electrode active material.

When the temperature of the heat treatment is set at a temperature equal to or higher than a melting point of the positive electrode collector and equal to or lower than a melting point of the negative electrode collector, for example, considering a typical structure where the positive electrode collector includes aluminum (melting point: 660°C) and the negative electrode collector includes copper (melting point: 1,085°C), the temperature of the heat treatment is preferably 660°C or higher and 1,085°C or lower, more preferably 660°C or greater and 850°C or lower. Since the temperature of the heat treatment is set to the above-mentioned range, the positive electrode collector formed of an aluminum foil is melted and embrittled so that the positive electrode collector is easily crushed into fine particles in the below-described crushing step. Therefore, copper included in the negative electrode collector is left as a shape close to a foil without being melted, as well as separating and recovering the aluminum derived from the housing. Moreover, the aluminum can be melted and separated, while embrittlement of metals other than the aluminum is prevented.

A method of measuring the temperature of the heat treatment is not particularly limited, and may be appropriately selected according to the intended purpose. Examples of the method include a method where a thermometer (e.g., a thermistor) is inserted into the lithium-ion secondary battery that is at the temperature of the heat treatment.

The duration of the heat treatment encompasses a period during which the heat treatment is performed on the lithium-ion secondary battery.

The duration of the heat treatment is not particularly limited, and may be appropriately selected according to the intended purpose. The duration of the heat treatment is preferably 1 minute or longer and 5 hours or shorter, more preferably 1 minute or longer and 2 hours or shorter, and particularly preferably 1 minute or longer and 1 hour or shorter. For example, the duration of the heat treatment may be the time required for the lithium-ion secondary battery to reach the temperature of the heat treatment, and the retention time may be short. The duration of the heat treatment is advantageously 1 minute or longer and 5 hours or shorter because a cost of the heat treatment can be reduced, and efficiency of the heat treatment can be improved.

### <<Lithium-ion secondary battery>>

The lithium-ion secondary battery is not particularly limited, except that the lithium-ion secondary battery can be crushed at least after the heat treatment. The lithium-ion secondary battery is appropriately selected from lithium-ion secondary batteries available in the art.

Specific examples of the lithium-ion secondary battery include defective lithium-ion secondary batteries generated during production processes of lithium-ion secondary batteries, lithium-ion secondary batteries used in devices discarded because of failures of the devices or after the end of service life of the devices, used lithium-ion secondary batteries discarded after the end of service life of the lithium-ion secondary batteries, and the like. The above-listed examples may be used alone or in combination.

The shape, structure, size, and material of the lithium-ion secondary battery are not particularly limited, and may be appropriately selected according to the intended purpose.

The shape of the lithium-ion secondary battery cell is not particularly limited, and may be appropriately selected according to the intended purpose. Examples of the shape of the lithium-ion secondary battery include laminate shapes, cylindrical shapes, button shapes, coin shapes, square shapes, flat shapes, and the like.

Moreover, the embodiment of the lithium-ion secondary battery is not particularly limited, and may be appropriately selected according to the intended purpose. Examples of the embodiment include battery cells, battery modules, battery packs, and the like.

The battery cell is a unit battery.

The battery module encompasses a plurality of battery cells connected and collectively assembled in one housing (a module housing).

The battery pack encompasses a plurality of battery modules collectively assembled in one housing (a pack housing). Moreover, the battery pack may be equipped with a regulation controller or a cooling device.

Examples of the structure of the lithium-ion secondary battery include a structure including a positive electrode, a negative electrode, a separator, an electrolyte solution, and an outer container, and the like. The structure of the lithium-ion secondary battery may be in a state of the structure where a positive electrode or a negative electrode is omitted.

### -Positive electrode-

The positive electrode is not particularly limited, except that the positive electrode includes a positive electrode active material including one of or both cobalt and nickel. The positive electrode may be appropriately selected according to the intended purpose.

The shape of the positive electrode is not particularly limited, and may be appropriately selected according to the intended purpose. Examples of the shape of the positive electrode include flat plate shapes, sheet shapes, and the like.

### --Positive electrode collector--

The shape structure, size, and material of the positive electrode collector are not particularly limited, and may be appropriately selected according to the intended purpose.

Examples of the shape of the positive electrode collector include foil shapes and the like.

Examples of the material of the positive electrode collector include stainless steel, nickel, aluminum, copper, titanium, tantalum, and the like. Among the above-listed examples, aluminum is preferred.

The positive electrode material is not particularly limited, and may be appropriately selected according to the intended purpose. Examples of the positive electrode material include a positive electrode material including at least a positive electrode active material, which includes rare valuable materials, and optionally further including a conductive agent and a binder resin.

Examples of the positive electrode active material include lithium cobalt oxide (LiCoO₂), lithium cobalt nickel oxide (LiCo_{1/2}Ni_{1/2}O₂), NCM-based positive electrode material (LiNiₓCo_{y}Mn_{z}O₂ (x+y+z=1)), NCA-based positive electrode material (nickel, cobalt, aluminum-based), lithium manganese oxide, a mixture of any of the foregoing positive electrode active materials, and the like.

The conductive agent is not particularly limited, and may be appropriately selected according to the intended purpose. Examples of the conductive agent include carbon black, graphite, carbon fibers, metal carbide, and the like.

The binder resin is not particularly limited, and may be appropriately selected according to the intended purpose. Examples of the binder resin include homopolymers or copolymers of vinylidene fluoride, ethylene tetrafluoride, acrylonitrile, ethylene oxide, etc., styrene-butadiene rubber, and the like.

### -Negative electrode-

The negative electrode is not particularly limited, except that the negative electrode includes a negative electrode active material including carbon. The negative electrode may be appropriately selected according to the intended purpose.

The shape of the negative electrode is not particularly limited, and may be appropriately selected according to the intended purpose. Examples of the shape of the negative electrode include flat plate shapes, sheet shapes, and the like.

### --Negative electrode collector--

The shape, structure, size, and material of the negative electrode collector are not particularly limited, and may be appropriately selected according to the intended purpose.

Examples of the shape of the negative electrode collector include foil shapes, and the like.

Examples of the material of the negative electrode collector include stainless steel, nickel, aluminum, copper, titanium, tantalum, and the like. Among the above-listed examples, copper is preferred.

The negative electrode material is not particularly limited, and may be appropriately selected according to the intended purpose. Examples of the negative electrode material include carbon materials (e.g., graphite, and hard carbon), titanite, and the like.

### -Electrolyte solution-

The electrolyte solution is not particularly limited, and may be appropriately selected from electrolyte solutions available in the related art. For example, the electrolyte solution includes an electrolyte and an organic solvent, and may further include other components, as necessary.

### -Cell housing-

The cell housing (may be referred to as a "housing") is not particularly limited, and may be appropriately selected according to the intended purpose. The cell housing is preferably a housing in which a positive electrode, a negative electrode, a separator, an electrolyte solution, and the like can be accommodated. Examples of the cell housing include battery cases, and the like.

The material of the cell housing is not particularly limited, and may be appropriately selected according to the intended purpose. Examples of the material of the cell housing include aluminum, resins (plastics), and the like.

### -Module housing-

The module housing is not particularly limited, and may be appropriately selected according to the intended purpose. Examples of the module housing include housings in each of which a plurality of battery cells are accommodated.

The material of the cell housing is not particularly limited, and may be appropriately selected according to the intended purpose. Examples of the material of the module housing include aluminum, resins (plastics), and the like.

### -Pack housing-

The pack housing is not particularly limited, and may be appropriately selected according to the intended purpose. Examples of the pack housing include housings in each of which a plurality of battery modules are accommodated.

The material of the cell housing is not particularly limited, and may be appropriately selected according to the intended purpose. Examples of the material of the pack housing include iron, stainless steel, aluminum, resins (plastics), and the like.

### <Crushing step>

The crushing step is a step of crushing a heat-treated product obtained in the heat treatment step.

The crushing step is not particularly limited, except that the crushing step includes crushing the heat-treated product to obtain a crushed product. The crushing step may be appropriately selected according to the intended purpose. In the present specification, the crushed product encompasses the heat-treated product that has been crushed.

A method of crushing the heat-treated product in the crushing step is not particularly limited, and may be appropriately selected according to the intended purpose. The method is preferably a method where the heat-treated product is crushed by impacts to obtain a crushed product. In the case where a housing of the lithium-ion secondary battery is not melted in the heat treatment step, for example, the heat-treated product is more preferably cut by a cutting device to pre-crush the heat-treated product before applying impacts to the heat-treated product.

Examples of the method of crushing the heat-treated product by impacts include: a method where the heat-treated product is thrown at a collision plate by a rotating striking plate to beat the heat-treated product with the collision plate to apply impacts; a method of beating the heat-treated product with a rotating hitting element (beater); and the like. For example, the method may be carried out by a hammer crusher or the like. Moreover, the method of crushing the heat-treated product by impacts may be, for example, a method of beating the heat-treated product with balls (e.g., ceramics), which may be carried out by a ball mill or the like. Moreover, crushing of the heat-treated product by impacts can be also performed, for example, by a two-shaft shredder that performs crushing with compression using short and narrow blades, or the like.

Furthermore, examples of the method of crushing the heat-treated product by impacts include a method of beating the heat-treated product with two rotating chains to apply impacts. For example, the method is performed by a chain mill or the like.

The duration of crushing in the crushing step is not particularly limited, and may be appropriately selected according to the intended purpose. For example, the duration of crushing per 1 kg of the lithium-ion secondary battery is preferably 1 second or longer and 30 minutes or shorter, more preferably 2 seconds or longer and 10 minutes or shorter, and particularly preferably 3 seconds or longer and 5 minutes or shorter.

In the case where crushing is performed by a collision-type or beating-type crushing device, such as a chain mill and a hammer mill, for example, the crushing conditions in the crushing step are set as follows. The tip speed of the chain or hammer is preferably 10 m/s or greater and 300 m/s or less. The retention time of the lithium-ion secondary battery in the crushing device is preferably 1 second or longer and 10 minutes or shorter. As the crushing conditions are set as described above, according to the method of separating valuable materials, the positive electrode material (e.g., copper, aluminum, etc.) and the members (e.g., iron derived from the housing) are crushed without being excessively pulverized.

### <Classification step>

The classification step includes a first classification step of classifying a crushed product obtained in the crushing step into a coarse-particle product and an intermediate product at a classification cut-point of 0.6 mm or greater and 2.4 mm or less, and a second classification step of classifying the intermediate product into a medium-particle product and a fine-particle product at a classification cut-point of 40 um or greater and 300 um or less.

As well as the first classification step and the second classification step, the classification step may further include further classification steps, such as a third classification step. In this case, an impurity content of each product (each element of the valuable materials) may be reduced further. Examples of the embodiment of performing further classification steps include: an embodiment (third classification step) where classification is additionally performed at a classification cut-point, which is lower than the second classification cut-point, after the second classification step; and the like.

### <<First classification step>>

The first classification step is a step of classifying a crushed product obtained in the crushing step into a coarse-particle product and an intermediate product at a classification cut-point of 0.6 mm or greater and 2.4 mm or less.

Since the first step is included, the crushed product (intermediate product) from which long pieces of at least one of copper and iron are removed in advance is processed in the second classification step. Therefore, a fine-particle product (valuable materials) in which cobalt and nickel are further concentrated can be obtained.

In the first classification step, classification may be repeated several times within the range of the classification cut-point of the first classification step. As a result, the impurity content of each product (each element of the valuable materials) can be reduced further.

The classification cut-point of the first classification step is 0.6 mm or greater and 2.4 mm or less. The classification cut-point of the first classification step is more preferably 1.2 mm in view of enhancement in selection accuracy of copper.

### <<Second classification step>>

The second classification step is a step of classifying the intermediate product obtained in the first classification step into a medium-particle product and a fine-particle product at a classification cut-point of 40 um or greater and 300 um or less.

The medium-particle product is coarse particles obtained by classifying the intermediate product in the second classification step. The fine-particle product is fine particles obtained by classifying the intermediate product in the second classification step.

In the second classification step, classification may be repeated several times within the classification cut-point of the second classification step. As a result, an impurity content of each product (each element of the valuable materials) can be reduced further.

The classification cut-point of the second classification step is 40 um or greater and 300 um or less. The classification cut-point is more preferably 40 um or greater and 75 um or less from the viewpoint of highly efficient removal of iron and copper.

Moreover, the second classification step includes wet classification performed one or more times. According to the wet classification, the classification can proceed while aggregations of particles are minimized compared to dry classification. Therefore, an impurity content of each product can be further reduced.

The classification step is not particularly limited, except that the classification step is a process method capable of performing the classification of the crushed product within the range of the classification cut-points. The classification step may be appropriately selected according to the intended purpose. For example, a multi-stage vibrating sieve, a cyclone, a cyclosizer, the standard sieve of JIS Z8801, or the like can be used.

In the present specification, the "classification cut-point" encompasses an opening size of a sieve in the case of classification by sieving, or an equiprobable cut size (D50) in the case of air flow classification. In the present specification, the "equiprobable cut size" encompasses a particle diameter at which a distribution rate of particles of a certain classification particle size recovered in the underflow of the cyclone is 50%. For example, a cyclone having a classification cut-point of 10 um encompasses a cyclone and operation conditions of the cyclone by which 50% of particles in the size of 10 um can be recovered in the underflow.

### <Other steps>

As well as the heat treatment step, the crushing step, and the classification step, the method of separating valuable materials may further include other steps.

The above-mentioned other steps are not particularly limited, and may be appropriately selected according to the intended purpose.

### <One example of present embodiment>

One example of an embodiment for carrying out the separation method for a lithium-ion secondary battery according to the present invention will be described with reference to a drawing. Fig. 1 is a flowchart illustrating one example of the flow of the process performed in an embodiment of the method of separating valuable materials of the present invention.

In the present embodiment, first, a lithium-ion secondary battery 100 is subjected to a heat treatment to obtain a heat-treated product of the lithium-ion secondary battery 100, as depicted in Fig. 1. In this step, the heat treatment is performed on the lithium-ion secondary battery 100 at a temperature equal to or higher than a melting point of aluminum and lower than a melting point of copper (660°C or higher and 1,085°C or lower) to melt aluminum included in the lithium-ion secondary battery 100 to separate and recover the melted aluminum 101 (Step ST1 of Fig. 1).

Next, the heat-treated product of the lithium-ion secondary battery 100 is crushed to obtain a crushed product (Step ST2 of Fig. 1). Then, the crushed product is classified into a coarse-particle product 102 (oversize product, from which the majority of copper and iron is removed) and an intermediate product 103 (undersize product, in which cobalt and nickel are recovered) with a sieve having an opening size of 0.6 mm or greater and 2.4 mm or less (first classification step) (Step ST3 of Fig. 1).

Next, the intermediate product 103 is classified into a medium-particle product (coarse particles) 104 and a fine-particle product (fine particles) 105 at a classification cut-point of 40 um or greater and 300 um or less (second classification step) (Step ST4 of Fig. 1). In the second classification step, part of the copper (Cu) and iron (Fe) recovered in the intermediate product in the first classification step can be separated as a medium-particle product 104, so that a fine-particle product having high grades of cobalt and nickel and low grades of copper and iron can be recovered.

As described above, in the present embodiment, cobalt, nickel, and manganese, and iron and copper included in the lithium-ion secondary battery can be highly accurately and efficiently separated, and high grade valuable materials having high concentrations of cobalt and nickel can be obtained at high recovery rates.

### Examples

The present invention will be concretely described through Examples and Comparative Examples hereinafter, but these Examples shall not be construed as limiting the scope of the present invention in any way.

### (Example 1)

### <Heat treatment step>

A battery pack (about 75 kg) of a lithium-ion secondary battery, which included an iron member in a pack housing and aluminum in a cell housing, was subjected to a heat treatment performed at a heat treatment temperature of 800°C (after elevating the temperature over the period of 1 hour, the temperature was maintained for 2 hours) using a batch-type burner furnace, available from Eco-System Akita Co., Ltd., serving as a heat treatment device, to thereby obtain a heat-treated product. When the heat treatment was carried out, the lithium-ion secondary battery was placed on a container, and the container was set in the heat treatment device. The aluminum was melted to separate and was recovered at the bottom of the container (i.e., performing melt recovery of aluminum).

### <Crushing step>

Subsequently, the heat-treated product obtained in the heat treatment step (the lithium-ion secondary battery to which the heat treatment was performed) was crushed by a hammer crusher (Makino-type swing hammer crusher HC-20-3.7, available from MAKINO MFG. CO., LTD.) serving as a crushing device at 50 Hz (circumferential speed of hammer: 38 m/s), with an outlet screen having grate-type opening holes of 30 mm × 200 mm, to thereby obtain a crushed product of the lithium-ion secondary battery.

### <First classification step>

Subsequently, the crushed product of the lithium-ion secondary battery was sieved with a sieve (diameter: 200 mm, available from TOKYO SCREEN CO., LTD.) having the screen opening size of 1.2 mm (first classification step) to classify into an oversize product (a coarse-particle product) and an undersize product (an intermediate product). One kilogram of the undersize product (the intermediate product) was provided as the crushed product used for the following step.

### -Grade analysis-

Part of the undersize product (the intermediate product) obtained by the first classification step was collected, and the collected product was dissolved in aqua regia. The resulting solution was analyzed by an ICP emission spectrometer (ICP-AES, iCAP6300, available from Thermo Fisher Scientific K.K.) to determine the grade (% by mass) of each of the elements included in the undersize product (the intermediate product), which is presented in Table 1.

**[Table 1]**

| Element | Li | Co | Ni | Al | Mn | Fe | Cu | C | Others |
|---|---|---|---|---|---|---|---|---|---|
| Grade (% by mass) | 3.1 | 5.5 | 5.8 | 8.6 | 13.9 | 4.2 | 11.2 | 21.6 | 26.1 |

### <Second classification step>

The undersize product (the intermediate product) obtained in <First classification step> was processed as a subject of a second classification step.

The undersize product (the intermediate product) was classified into an oversize product (a medium-particle product) and an undersize product (a fine-particle product) using an electromagnetic sieve of 300 um. As the electromagnetic sieve, an electromagnetic vibratory sieve shaker (AS200 Control, available from Retsch GmbH) was used and operated for 20 minutes at the amplitude of 1.45 mm.

### -Grade analysis-

An amount of each of the elements of the undersize product (the fine-particle product) obtained in the second classification step was determined in the same manner as in the grade analysis of the intermediate product in the first classification step. A recovery rate (%) of each of the elements of the undersize product (the fine-particle product) obtained in the second classification step relative to 100% of the amount of each of the elements of the intermediate product obtained in the first classification step was determined, and was presented in Table 2.

### (Example 2)

<Heat treatment step>, <Crushing step>, <First classification step>, and <Second classification step> were performed in the same manner as in Example 1 to recover a fine-particle product, except that the classification cut-point of the second classification step was changed to 150 um. Moreover, a recovery rate of each of the elements in the fine-particle product was determined in the same manner as in Example 1, which is presented in Table 2.

### (Example 3)

<Heat treatment step>, <Crushing step>, <First classification step>, and <Second classification step> were performed in the same manner as in Example 1 to recover a fine-particle product, except that the classification cut-point of the second classification step was changed to 75 um. Moreover, a recovery rate of each of the elements in the fine-particle product was determined in the same manner as in Example 1, which is presented in Table 2.

### (Example 4)

<Heat treatment step>, <Crushing step>, <First classification step>, and <Second classification step> were performed in the same manner as in Example 1 to recover a fine-particle product, except that the classification cut-point of the second classification step was changed to 40 um. Moreover, a recovery rate of each of the elements in the fine-particle product was determined in the same manner as in Example 1, which is presented in Table 2.

### (Example 5)

<Heat treatment step>, <Crushing step>, and <First classification step> were performed in the same manner as in Example 1 to recover a fine-particle product, except that <Second classification step> was changed as follows. Moreover, a recovery rate of each of the elements in the fine-particle product was determined in the same manner as in Example 1, which is presented in Table 2.

### <Second classification step>

The intermediate product (0.1 kg) obtained in <First classification step> was added to 0.5 L of water contained in a 1 L glass beaker, followed by stirring by a magnetic stirrer at 300 rpm for 1 hour, to thereby produce slurry of the intermediate product. The produced slurry was subjected to classification with an electromagnetic sieve of 40 µm (electromagnetic vibratory sieve shaker, AS200 control, available from Retsch GmbH) operated at the amplitude of 1.45 mm for 20 minutes to classify the slurry into an oversize product (a medium-particle product) and an undersize product (slurry including a fine-particle product) to recover slurry including a fine-particle product. The obtained slurry including the fine-particle product was subjected to solid-liquid separation with 5C filter paper, followed by drying the obtained cake at 105°C for two hours, to thereby obtain a fine-particle product.

### (Comparative Example 1)

<Heat treatment step>, <Crushing step>, <First classification step>, and <Second classification step> were performed in the same manner as in Example 1 to recover a fine-particle product, except that the classification cut-point of the second classification step was changed to 600 um. Moreover, a recovery rate of each of the elements in the fine-particle product was determined in the same manner as in Example 1, which is presented in Table 2.

**[Table 2]**

| | Second classification step | | Recovery rate of each of elements in fine-particle product | | | | | | | |
|---|---|---|---|---|---|---|---|---|---|---|
| | Cut-point (µm) | System | Li (%) | Co (%) | Ni (%) | Al (%) | Mn (%) | Fe (%) | Cu (%) | C (%) |
| Ex. 5 | 40 | Wet | 58 | 91 | 79 | 34 | 83 | 12 | 7 | 80 |
| Ex. 4 | 40 | Dry | 50 | 75 | 70 | 28 | 72 | 9 | 6 | 79 |
| Ex. 3 | 75 | Dry | 60 | 92 | 81 | 34 | 84 | 15 | 8 | 80 |
| Ex. 2 | 150 | Dry | 78 | 96 | 81 | 52 | 89 | 16 | 17 | 81 |
| Ex. 1 | 300 | Dry | 91 | 99 | 86 | 68 | 91 | 30 | 50 | 91 |
| Comp. Ex. 1 | 600 | Dry | 97 | 100 | 90 | 83 | 97 | 60 | 83 | 96 |

According to the results in Table 2, concentration of cobalt and nickel was achieved as the fine-particle product in Examples 1 to 5. Specifically, 70% or greater of cobalt and 70% or greater of nickel were recovered in the fine-particle product, and 70% or greater of iron and 50% or greater of copper contained in the intermediate product could be removed from the fine-particle product.

In Comparative Example 1, 60% or greater of iron and 80% or greater of copper were recovered in the fine-particle product, and the iron and copper were not adequately separated from cobalt and nickel.

### Description of Symbols

- ST1: heat treatment step
- ST2: crushing step
- ST3: first classification step
- ST4: second classification step
- 100: lithium-ion secondary battery
- 101: aluminum
- 102: coarse-particle product
- 103: intermediate product
- 104: medium-particle product
- 105: fine-particle product

## Claims

1. A method of separating valuable materials, the method comprising:
a heat treatment step of performing a heat treatment on a lithium-ion secondary battery including valuable materials;
a crushing step of crushing a heat-treated product obtained in the heat treatment step; and
a classification step including a first classification step of classifying a crushed product obtained in the crushing step into a coarse-particle product and an intermediate product at a classification cut-point of 0.6 mm or greater and 2.4 mm or less, and a second classification step of classifying the intermediate product into a medium-particle product and a fine-particle product at a classification cut-point of 40 um or greater and 300 um or less.

2. The method of separating valuable material according to claim 1,
wherein the crushed product obtained in the crushing step is classified into the coarse-particle product and the intermediate product at the classification cut-point of 1.2 mm in the first classification step.

3. The method of separating valuable materials according to claim 1 or 2,
wherein the heat treatment is performed on the lithium-ion secondary battery at 660°C or higher and 1,085°C or lower in the heat treatment step.

4. The method of separating valuable materials according to any one of claims 1 to 3,
wherein the intermediate product is classified by wet classification at the classification cut-point of 40 um or greater and 75 um or less in the second classification step.

5. The method of separating valuable materials according to any one of claims 1 to 4,
wherein the lithium-ion secondary battery is a lithium-ion secondary battery pack selected from a lithium-ion secondary battery pack for cars, a lithium-ion secondary battery pack for energy storage systems, and a lithium-ion secondary battery pack for uninterruptible power supplies.
